# EUROPEAN PATENT SPECIFICATION

(11) **EP 3 605 899 B1**
(45) Date of publication and mention of the grant of the patent: **07.04.2021**
(21) Application number: 18794107.5
(22) Date of filing: 26.04.2018
(51) Int. Cl.: H04L 1/00, H04L 1/16, H04L 1/18, H04L 5/00

(54) **INFORMATION PROCESSING METHOD AND DEVICE**
INFORMATIONSVERARBEITUNGSVERFAHREN UND -VORRICHTUNG
DISPOSITIF ET PROCÉDÉ DE TRAITEMENT D'INFORMATIONS

(30) Priority: 05.05.2017 CN 201710313643
(43) Date of publication of application: 05.02.2020
(73) Proprietor: Huawei Technologies Co., Ltd., Longgang District Shenzhen, Guangdong 518129 (CN)
(72) Inventor: WEN, Ronghui, Shenzhen Guangdong 518129 (CN); LYU, Yongxia, Shenzhen Guangdong 518129 (CN); YAN, Zhiyu, Shenzhen Guangdong 518129 (CN); MA, Ruixiang, Shenzhen Guangdong 518129 (CN)
(74) Representative: Pfenning, Meinig & Partner mbB
(86) International application number: PCT/CN2018/084607
(87) International publication number: WO 2018/201962

(56) References cited:
- EP-A1- 3 043 502
- WO-A1-2013/136314
- CN-A- 101 369 874
- CN-A- 101 789 849
- CN-A- 101 873 647
- CN-A- 102 447 535
- CN-A- 103 580 812
- US-A1- 2014 376 424
- US-A1- 2015 003 347

## Description

### TECHNICAL FIELD

The present invention relates to the communications field, and in particular, to an information processing method and device.

### BACKGROUND

Development of mobile communications technologies results in explosive growth of mobile data traffic and massive mobile communications device connections, and various types of new services and application scenarios constantly emerge. People need a mobile communications technology with higher performance, and the fifth generation (the fifth generation, 5G) mobile communications system emerges.

The International Telecommunication Union (international telecommunication union, ITU) defines three major kinds of application scenarios for 5G and a future mobile communications system: enhanced mobile broadband (enhanced mobile broadband, eMBB), ultra-reliable low-latency communication (ultra reliable and low latency communications, URLLC), and massive machine-type communications (massive machine type communications, mMTC). Different services have different requirements for the mobile communications system. A URLLC service has an extremely high requirement for latency, and a plurality of feedbacks are required to improve reliability and reduce the latency.

To ensure the reliability and low latency in the URLLC service, when an access network device communicates with a terminal, the terminal periodically feeds back, and the access network device receives feedbacks from the terminal for a plurality of times. However, because the access network device needs to receive the feedbacks for a plurality of times to ensure communication reliability, the latency is increased due to the receiving of the feedbacks for a plurality of times.

US 2014/376424 A1 and US 2015/003347 A1 describe a feedback method with a first indication information of a feedback mechanism for LTE/LTE-Advanced systems. EP 3 043 502 A1 discloses a hybrid automatic request (HARQ) acknowledgment feedback method with a reduced latency for the frequency division duplex (FDD) mode in LTE/LTE-Advanced systems.

### SUMMARY

This invention is defined and limited by the scope of the appended claims. above mentioned problems are solved by the methods of claims 1 or 4, the apparatus according to claim 7 or 8 and the computer program according to claim 9. Embodiments of the present invention provide an information processing method and device, applicable to indicate a feedback mechanism for data transmission.

In view of this, a first aspect of this application provides an information processing method according to claim 1.

A second aspect of this application provides an information processing method according to claim 4.

A third aspect of this application provides an information processing device according to claim 7.

A fourth aspect of this application provides an information processing device according to claim 8.

Another aspect of this application provides a computer readable storage medium according to claim 9.

From the foregoing technical solutions, it can be learned that the embodiments of the present invention have the following advantage:
the first device sends the first indication information to the second device, where the first indication information is used to indicate the first feedback mechanism of the second device for the data transmission, the first feedback mechanism is at least one of the plurality of feedback mechanisms, and the types of the at least two of the plurality of feedback mechanisms are different; and the first device receives the first feedback information sent by the second device based on the first feedback mechanism, so that feedback messages do not need to be sent for a plurality of times, and therefore reliability in communication is ensured and latency is reduced.

### DESCRIPTION OF DRAWINGS

FIG. 1 is a schematic diagram of a architecture of a mobile communications system 100 according to an embodiment of this application;
FIG. 2 is a schematic diagram of an embodiment of an information processing method according to an embodiment of this application;
FIG. 3 is a schematic diagram of an embodiment of a signal processing device 300 according to an embodiment of this application;
FIG. 4 is a schematic diagram of an embodiment of a signal processing device 400 according to an embodiment of this application;
FIG. 5 is a schematic diagram of an embodiment of a signal processing device 500 according to an embodiment of this application; and
FIG. 6 is a schematic diagram of an embodiment of a signal processing device 600 according to an embodiment of this application.

### DESCRIPTION OF EMBODIMENTS

Embodiments of the present invention provide an information processing method and device, applicable to indicate a feedback mechanism for data transmission.

To make a person skilled in the art better understand the solutions in the embodiments of the present invention, the following clearly and completely describes the technical solutions in the embodiments of the present invention with reference to the accompanying drawings in the embodiments of the present invention. Apparently, the described embodiments are merely some but not all of the embodiments of the present invention.

In the specification, claims, and accompanying drawings of the present invention, the terms "first", "second", "third", "fourth", and so on (if any) are intended to distinguish between similar objects but do not necessarily indicate a specific order or sequence. It should be understood that the data termed in such a way are interchangeable in proper circumstances so that the embodiments described herein may be implemented in other orders than the order illustrated or described herein. Moreover, the terms "include", "contain" and any other variants mean to cover the non-exclusive inclusion, for example, a process, method, system, product, or device that includes a list of steps or units is not necessarily limited to those expressly listed steps or units, but may include other steps or units that are not expressly listed or inherent to such a process, method, system, product, or device.

In some feasible embodiments, a first device and a second device may both be radio access network devices or terminals, or one of the first device and the second device may be a radio access network device and the other is a terminal. This is not limited herein. The following description is based on an example in which the first device is a radio access network device and the second device is a terminal.

In the embodiments of the present invention, a radio access network device is an access device used by a terminal to access a mobile communications system in a wireless manner, and may be a base station, an evolved base station, a base station in a 5G mobile communications system, a base station in a future mobile communications system, an access node in a wireless fidelity (WiFi) system, or the like. The embodiments of this application impose no limitation on a specific technology and a specific device form used by the radio access network device. The radio access network device is configured to send a synchronization, broadcast, or control signal to a terminal, and is responsible for scheduling each terminal to send or receive information to exchange data with the terminal.

The terminal may also be referred to as a terminal Terminal, user equipment (user equipment, UE), a mobile station (mobile station, MS), a mobile terminal (mobile terminal, MT), or the like. The terminal may be a mobile phone (mobile phone), a tablet (Pad), a computer with a wireless transmission/receiving function, a virtual reality (Virtual Reality, VR) terminal, an augmented reality (Augmented Reality, AR) terminal, a wireless terminal in industrial control (industrial control), a wireless terminal in self driving (self driving), a wireless terminal in a remote surgery (remote medical surgery), a wireless terminal in a smart grid (smart grid), a wireless terminal in transportation safety (transportation safety), a wireless terminal in a smart city (smart city), a wireless terminal in a smart home (smart home), or the like.

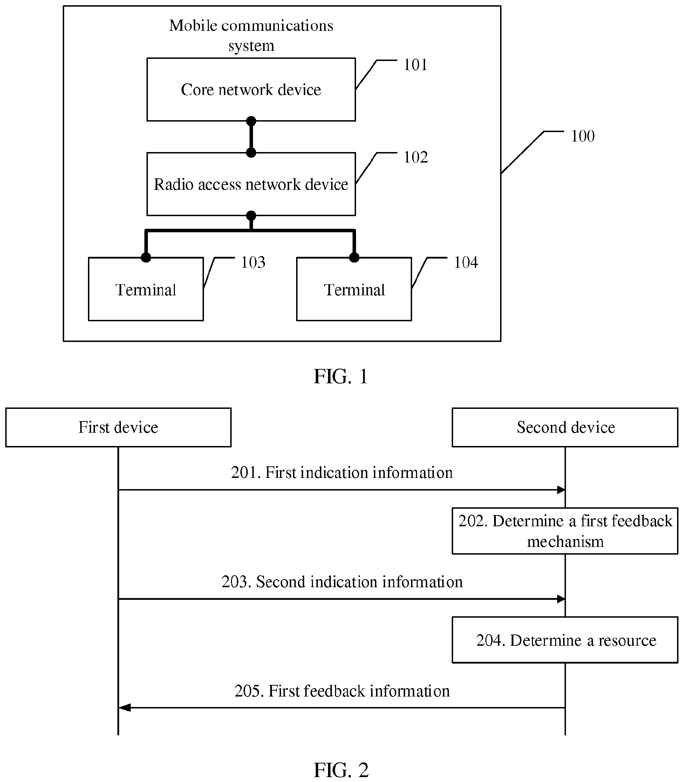

FIG. 1 is a schematic diagram of architecture of a mobile communications system 100 according to this application. The mobile communications system includes a core network device 101, a radio access network device 102, a terminal 103, and a terminal 104.

In the mobile communications system 100, the terminals are connected to the radio access network device in a wireless manner, and the radio access network device is connected to the core network device in a wireless or wired manner. The core network device and the radio access network device may be different physical devices that are independent of each other, or a function of the core network device and a logical function of the radio access network device may be integrated into a same physical device, or some functions of the core network device and some functions of the radio access network device may be integrated into one physical device. The terminals may be at fixed locations, or may be mobile. FIG. 1 is merely a schematic diagram. The communications system may further include other network devices, for example, may further include a wireless relay device and a wireless backhaul device, which are not drawn in FIG. 1. Quantities of core network devices, radio access network devices, and terminals included in the mobile communications system are not limited in this embodiment of this application.

The radio access network device and the terminals may be deployed on land, including indoor or outdoor and handheld or vehicle-mounted devices and terminals, or may be deployed on water, or may be deployed on an airplane, a balloon, or a satellite in the air. An application scenario of the radio access network device and the terminals is not limited in this embodiment of this application.

It should be noted that, this embodiment of this application may be applied to downlink data transmission, or may be applied to uplink data transmission, or may be applied to device-to-device (device to device, D2D) data transmission. For the downlink data transmission, a first device is a radio access network device, and a corresponding second device is a terminal. For the uplink data transmission, the first device is a terminal, and the corresponding second device is a radio access network device. For the D2D data transmission, the first device is a terminal, and the corresponding second device is also a terminal. A data transmission direction is not limited in this embodiment of this application.

It should be noted that the first device and the second device may communicate with each other by using a licensed spectrum (licensed spectrum), or may communicate with each other by using an unlicensed spectrum (unlicensed spectrum), or may communicate with each other by using both the licensed spectrum and the unlicensed spectrum. This is not limited herein.

Development of the mobile communications technologies results in massive mobile communications device connections, and various types of new services and application scenarios constantly emerge. People need a mobile communications technology with higher performance. The International Telecommunication Union (international telecommunication union, ITU) defines three major kinds of application scenarios for 5G and a future mobile communications system: enhanced mobile broadband (enhanced mobile broadband, eMBB), ultra-reliable low-latency communication (ultra reliable and low latency communications, URLLC), and massive machine-type communications (massive machine type communications, mMTC).

A URLLC service has an extremely high requirement for latency, and a plurality of feedbacks are required to improve reliability and reduce the latency. To ensure the reliability and low latency in the URLLC service, when an access network device communicates with a terminal, the terminal periodically feeds back, and the access network device receives feedbacks from the terminal for a plurality of times. However, because the access network device needs to receive the feedbacks for a plurality of times to ensure communication reliability, a property of low latency is affected.

Therefore, in this application, the first device sends first indication information to the second device, where the first indication information is used to indicate a first feedback mechanism of the second device for data transmission, the first feedback mechanism is at least one of a plurality of feedback mechanisms, and types of at least two of the plurality of feedback mechanisms are different; and the first device receives first feedback information sent by the second device based on the first feedback mechanism, so that feedback messages do not need to be sent for a plurality of times, and therefore reliability in communication is ensured and the latency is reduced.

In view of this, FIG. 2 is an information processing method according to an embodiment of the present invention, and the method includes:

201. A first device sends first indication information to a second device, where the first indication information is used to indicate a first feedback mechanism of the second device for data transmission, the first feedback mechanism is at least one of a plurality of feedback mechanisms, and types of at least two of the plurality of feedback mechanisms are different.

202. The second device determines the first feedback mechanism for the data transmission based on the first indication information.

In this embodiment of the present invention, the first device and the second device may both be a radio access network device or a terminal, or one of the first device and the second device may be a radio access network device and the other is a terminal. This is not limited herein. The following description is based on an example in which the first device is a radio access network device and the second device is a terminal.

In this embodiment of the present invention, the first device may determine, based on a channel status, a latency requirement, and terminal performance, a to-be-used feedback mechanism to obtain the first feedback mechanism. In this embodiment of the present invention, the first indication information is used to indicate the first feedback mechanism of the second device for the data transmission, the first feedback mechanism is at least one of the plurality of feedback mechanisms, and the types of the at least two of the plurality of feedback mechanisms are different.

In this embodiment of the present invention, the plurality of feedback mechanisms include:
feeding back an acknowledgement message and a channel quality indication message;
feeding back the acknowledgement message, and skipping feeding back the channel quality indication message;
skipping feeding back the acknowledgement message, and feeding back the channel quality indication message; and
skipping feeding back the acknowledgement message and the channel quality indication message.

It should be noted that, a feedback time sequence not only includes the foregoing four feedback mechanisms, but also may include another feedback time sequence. This is not limited herein.

It should be noted that, the first indication information is used to indicate a first transmission mechanism for the data transmission, the first transmission mechanism is at least one of a plurality of transmission mechanisms, there is a correspondence between the plurality of transmission mechanisms and the plurality of feedback mechanisms, and the first transmission mechanism is corresponding to the first feedback mechanism.

Specifically, for example, in URLLC, there are a plurality of transmission mechanisms, including one shot transmission, fast channel quality information feedback transmission, and the like.

One shot transmission manner: A transmit end improves data reliability by repeating transmission for a plurality of times. As shown in the following figure, a transmit end continuously and repeatedly sends same data, that is, sends a same data signal at moments t1 to t6. Because of a demodulation and decoding delay, data receiving feedback information at the moment t1 may be determined to feed back at the moment t4. If a data receive end at the moment t1 fails to decode and obtains a negative acknowledgement, a terminal may decode correctly at the moment t2 and obtains a positive acknowledgement feedback (this is a case in which merely an ACK/NACK is fed back). The transmit end receives the positive acknowledgement corresponding to the moment t2 at the moment t5, and stops sending the data, that is, the data is no longer sent at the moment t6. The receive end may further no longer feed back and send acknowledgement information at the moment t3 and a subsequent moment (an ACK at the moment t3, in a dashed line).

Furthermore, in the one shot manner, the transmit end receives a positive acknowledgement sent by the receive end and stops sending data, so that the receive end may not feed back a negative acknowledgement. That is, the NACK at the moment t1 is not fed back, and merely the ACK at the moment t2 is fed back.

In addition, if the transmit end finds that current data transmission has a high requirement for latency and a transmission time is shorter than an acknowledgement feedback time, the transmit end may request the receive end not to feed back an acknowledgement message. Because the transmit end stops sending data based on an ACK, if a feedback time of the acknowledgement message is shorter than a sending time, the feedback is meaningless and therefore the acknowledgement message is not fed back. (This is a case in which both feedback information and channel quality information are not fed back.)

Fast channel quality information feedback transmission: To ensure low latency, next transmission is performed before acknowledgement information is fed back; to improve reliability of single transmission, fast channel quality information feedback is used to adjust subsequent data transmission. Fast channel quality information is channel quality measured by a receive end based on a pilot corresponding to sent data, and may be used as a reference for subsequent data transmission parameter adjustment. (This is a case in which both an ACK and a NACK are fed back.)

In addition, if considering that a previous channel measurement result is inaccurate, the transmit end may request the receive end to merely feed back the channel quality information as a reference for a transmission parameter of subsequent data. (This is to a case in which channel quality information is fed back.)

Therefore, different data transmission manners are corresponding to different feedback modes. It may be considered that if the transmit end indicates a transmission mode, a feedback mode may be indirectly indicated, , if the transmit end indicates a feedback mode, a transmission mode may be indirectly indicated.

In a specific indication method, 2-bit status information may be used to indicate feedback modes, that is, four states 00, 01, 10, and 11 separately and correspondingly indicate different feedback modes.

In some feasible embodiments, a manner in which the first device notifies the first feedback mechanism to the second device may be:
(1) dynamic signaling, indicating the first feedback mechanism in control signaling used to indicate data transmission, that is, each time there is data transmission, corresponding signaling indicates a transmission mechanism to be used, which may be sent with data scheduling signaling or sent separately; or
(2) notification by using high-layer semi-static signaling, that is, a feedback mechanism is determined in advance, where a feedback mechanism to be used may be notified by using high-layer signaling, and the feedback mechanism may change, but a change frequency is different from that in the dynamic signaling that the feedback mechanism is likely to be different in each transmission, and the feedback mechanism will continue for a period of time until next signaling arrives or a valid time of the signaling ends.

In some feasible embodiments, the first device indicates the feedback mechanism of the second device to the second device, and the first device may notify scheduling information and the transmission mechanism to the second device based on a downlink transmitting band. For uplink, in a scenario in which a network device schedules uplink data transmission of a terminal, a receive end (a base station) sends the transmission mechanism and the scheduling information to a transmit end (the terminal).

In addition, an uplink transmission manner based on a grant-free instruction (Grant-free) is also a candidate technology for URLLC uplink transmission, that is, data is directly sent on a pre-agreed resource without waiting for a base station to allocate and schedule resource. In this way, overheads and latency in sending a scheduling request by the terminal and sending a downlink scheduling instruction by the base station are reduced. In this case, the feedback mechanism is determined by the terminal itself (that is, determined by the transmit end), or is configured by the base station by using semi-static signaling.

In some feasible embodiments, the first feedback mechanism is feeding back the acknowledgement message and the channel quality indication message, when a resource of feedback information includes a same resource used to feed back the acknowledgement message and the channel quality indication message, the acknowledgement message and the channel quality indication message are jointly encoded; or when a resource of feedback information includes resources separately used to feed back the acknowledgement message and to feed back the channel quality indication message, the acknowledgement message and the channel quality indication message are separately encoded.

In some feasible embodiments, a type of first feedback information includes the acknowledgement message and/or the channel quality indication message, and the acknowledgement message may include a positive acknowledgement message and a negative acknowledgement message. It should be noted that the first feedback message not only includes the acknowledgement message and the channel quality indication message, but also may further includes another message. This is not limited herein.

In addition, the acknowledgement message may only feed back the positive acknowledgement message, or may feed back the positive acknowledgement message or the negative acknowledgement message based on a data demodulation and decoding status. This is not limited herein.

203. The first device sends second indication information to the second device, where the second indication information is used to indicate a resource used to send the acknowledgement message and the channel quality indication message.

204. The second device determines, based on the second indication information, the resource used to send the acknowledgement message and the channel quality indication message.

In some feasible embodiments, the first device may further determine the resource used to send the acknowledgement message and the channel quality indication message, where the resource is used to carry the first feedback information when the second device sends the first feedback information to the first device.

In some feasible embodiments, the second indication information is carried in control information, and the control information is used to schedule the data transmission; or the second indication information is a reference signal, and a resource of the acknowledgement message and the channel quality indication message has a predetermined mapping relationship with the reference signal.

The resource may be included in the control signaling, and the resource is used each time the second device receives the control signaling. Alternatively, the second device may obtain a channel resource group in advance, and when the control signaling is received, the control signaling indicates that the required resource is determined from the channel resource group. This is not limited herein.

In this embodiment of the present invention, in addition to indicating the first feedback information, the first device may further indicate channel resources that may be occupied by different feedback information. Specifically, a method for indicating a resource of the first feedback information may be "dynamic indication", "semi-static indication", or "implicit indication".

"Dynamic indication" may be separate indication each time, that is, time and frequency resources occupied by each feedback information are indicated in detail in each control signaling.

"Dynamic indication" may further be that control signaling in previous k times of transmission indicates a location of the current resource (for example, a value of k is determined by a moment at which the first device determines that the terminal may correctly receive information, and k is greater than or equal to 1), and then indication of subsequent times is determined based on indication of a time. Time domain is obtained by the terminal through calculation based on a time sequence, and frequency domain may occupy a same resource each time or may be obtained in a preset frequency hopping manner. This is not limited herein.

"Semi-static indication" may be that a channel resource is pre-allocated to the second device by using the high-layer signaling in advance, and after receiving information, the second device obtains the resource by default at a corresponding location of the resource; or the first device notifies, in advance, the terminal of a subset of resource information that may be used to transmit each feedback information, and the control information indicates a location of a subset corresponding to current transmission. This is not limited herein.

The "implicit indication" may be: after the control signaling is received by using the second device, a channel resource for receiving the control signaling is determined, and then the resource is determined based on a preset correspondence between the channel resource and the resource.

The second indication information is a slot in which control information is located, and the slot has a predetermined mapping relationship with a resource of the acknowledgement message and the channel quality indication message.

Specifically, after detecting the control signaling received by the second device, the second device correspondingly obtains, based on a location of the resource and the mapping relationship, the resource used to carry the first feedback information. For example, a feedback time is determined based on a fixed time sequence relationship and data is sent at a moment t; by default, channel quality information is fed back at a moment t+1, the acknowledgement message is fed back at a moment t+3, a frequency may be an offset of a frequency resource occupied by the data, and an offset volume is predefined. Similarly, the resource is determined based on a mapping relationship between a pilot signal and the resource. This is not limited herein.

It should be noted that, in different channel resources, resource indication of time and frequency may be performed in a same indication manner, or may be performed in different manners. For example, the time is obtained in an implicit manner, and the frequency is indicated by using dynamic information. Different feedback information may use a same indication manner, or may use different indication manners. For example, the channel quality indication message and the acknowledgement message use different resource indication manners. This is not limited herein. A plurality of pieces of feedback information corresponding to a same moment may be fed back at a same moment or may be fed back at different moments, and this is not limited herein. For example, the data is sent at the moment t, the channel quality indication information is fed back by default at the moment t+1, and the acknowledgement message is fed back at the moment t+3. In other feasible embodiments, feedback information corresponding to a plurality of moments may be fed back at a same moment.

It should be further noted that, if a plurality of pieces of feedback information exist at a same moment and indicate a same channel resource, joint encoding is performed; if indicated resource locations are different, one of the following manners may be selected:
(1) A channel resource is selected, and a plurality of pieces of first feedback information are jointly encoded and sent.
(2) Each feedback information is sent on a corresponding resource.
(3) In consideration of power allocation, one of the channel resources may further be selected as the resource for sending. For example, if data confirmation information is a negative acknowledgement and the channel quality information further needs to be fed back, the channel quality information is fed back; if data confirmation information is a positive acknowledgement and the channel quality information further needs to be fed back, the positive acknowledgement is fed back.

Description is provided in the following with reference to an example. When the feedback mechanism is feeding back the acknowledgement message and the channel quality indication message:
the first device sends the control signaling to the second device at a moment t1, and the second device may feed back channel quality indication information obtained through measurement based on a pilot signal corresponding to the data and an acknowledgement message (a positive acknowledgement or a negative acknowledgement) obtained after data information is decoded. The channel quality indication information may be obtained at the moment t1 or a moment t1+1, the acknowledgement message may be obtained at a moment (t1+n). Therefore, the channel quality indication information and the acknowledgement message corresponding to the data at the moment t1 are separately fed back at different moments.

A slot in which the second indication information is located is a slot n, a resource of the channel quality indication message is located in the slot n or a slot n+1, and a resource of the acknowledgement message is located in a slot n+k, where n and k are natural numbers, and k is greater than or equal to 1.

It should be noted that, in some feasible embodiments, step 203 and step 204 are not performed after step 201 and step 202, but may be separately implemented. This is not limited herein.

205. The second device sends the first feedback information to the first device based on the first feedback mechanism.

In this embodiment of the present invention, when receiving the control signaling, the second device may determine the first feedback mechanism based on the control signaling, and determine the first feedback information based on the first feedback mechanism. The control signaling may include the first feedback mechanism, so that the second device directly uses the first feedback mechanism. In some other feasible embodiments, the second device may alternatively obtain an optional feedback mechanism group in advance, and then the received control signaling may indicate that one feedback mechanism is selected as the first feedback mechanism from the feedback mechanism group. This is not limited herein.

In this embodiment of the present invention, after determining the first feedback mechanism, the resource, and the first feedback information, the second device may feed back the first feedback information to the first device based on the first feedback mechanism and a first feedback manner. The first feedback information is carried by the resource. Because the first device sends the control signaling that may indicate the first feedback mechanism to the second device, the second device may determine the first feedback message and a need to feed back the first feedback message based on the control signaling, and feed back the first feedback message in a timely manner, without a need to send feedback messages for a plurality of times. Therefore, reliability in communication is ensured, and the latency is reduced.

In some other feasible embodiments, when the first device is a radio access network device and the second device is a terminal, the radio access network device may send the control signaling to the terminal, where the control signaling is used to indicate the first feedback mechanism, the resource, and the first feedback information, so that the terminal obtains the first feedback mechanism, the resource, and the first feedback information. When the terminal sends data to the radio access network device by using the resource, the radio access network device feed back, based on the first feedback mechanism, the first feedback information to the terminal by using the resource. This is not limited herein.

In this embodiment of the present invention, when receiving the control signaling, the second device may determine the first feedback mechanism based on the control signaling, and determine the first feedback information based on the first feedback mechanism. The control signaling may include the first feedback mechanism, so that the second device directly uses the first feedback mechanism. In some other feasible embodiments, the second device may alternatively obtain an optional feedback mechanism group in advance, and then the received control signaling may indicate that one feedback mechanism is selected as the first feedback mechanism from the feedback mechanism group. This is not limited herein.

In some feasible embodiments, different feedback manners are required for feeding back information. Generally, an encoding manner and a sequence manner may be included.

Specifically, in the encoding manner, different feedback information may be jointly encoded, that is, be fed back on a same channel resource. Alternatively, different feedback information may be separately encoded, that is, different feedback information may be fed back on a same channel resource or on different channel resources. For example, the acknowledgement message uses an encoding manner, and the channel quality indication message uses another encoding manner.

In the sequence manner, different feedback information may be corresponding to different sequences, or different feedback information may be corresponding to a cyclic shift of a same sequence. For example, merely a negative acknowledgement to control information receiving and a positive acknowledgement to data receiving are reported; then, a cyclic shift 0 is corresponding to the negative acknowledgement to the control information receiving, and a cyclic shift m is corresponding to the positive acknowledgement to the data receiving, where m is greater than 0. In some other feasible embodiments, different feedback information may use a same feedback manner, or may use different feedback manners. For example, confirmation information is fed back in the sequence manner, and the channel quality information is fed back in the encoding manner.

The information processing method in the embodiments of this application is described above, and the information processing device in the embodiments of this application is described below.

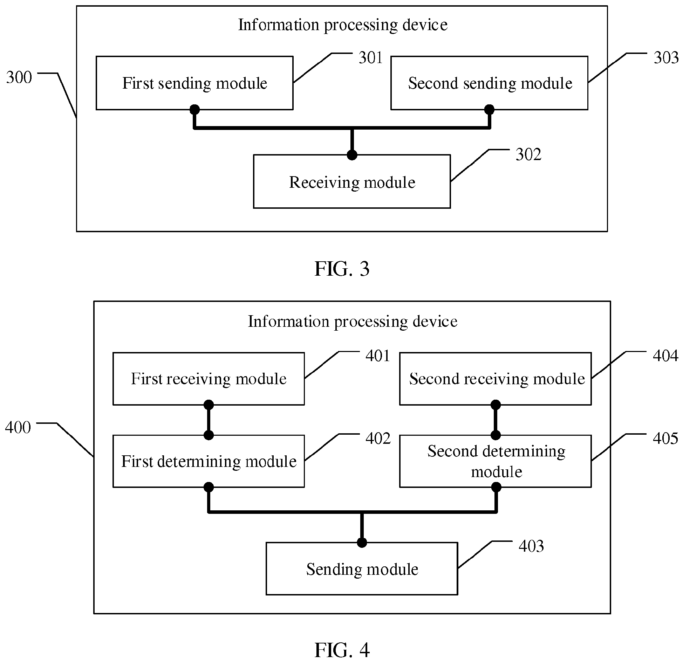

Referring to FIG. 3, an embodiment of an information processing device 300 according to an embodiment of the present invention includes:
a first sending module 301, configured to send first indication information to a second device, where the first indication information is used to indicate a first feedback mechanism of the second device for data transmission, the first feedback mechanism is at least one of a plurality of feedback mechanisms, and types of at least two of the plurality of feedback mechanisms are different; and
a receiving module 302, configured to receive first feedback information sent by the second device based on the first feedback mechanism.

The information processing device 300 further includes:
a second sending module 303, configured to send second indication information to the second device, where the second indication information is used to indicate a resource used to send an acknowledgement message and a channel quality indication message.

Referring to FIG. 4, an embodiment of an information processing device 400 according to an embodiment of the present invention includes:
a first receiving module 401, configured to receive first indication information sent by a first device;
a first determining module 402, configured to determine a first feedback mechanism for data transmission based on the first indication information, where the first feedback mechanism is at least one of a plurality of feedback mechanisms, and types of at least two of the plurality of feedback mechanisms are different; and
a sending module 403, configured to send first feedback information to the first device based on the first feedback mechanism.

The information processing device 400 further includes:
a second receiving module 404, configured to receive second indication information sent by the first device; and
a second determining module 405, configured to determine a resource used to send an acknowledgement message and a channel quality indication message based on the second indication information.

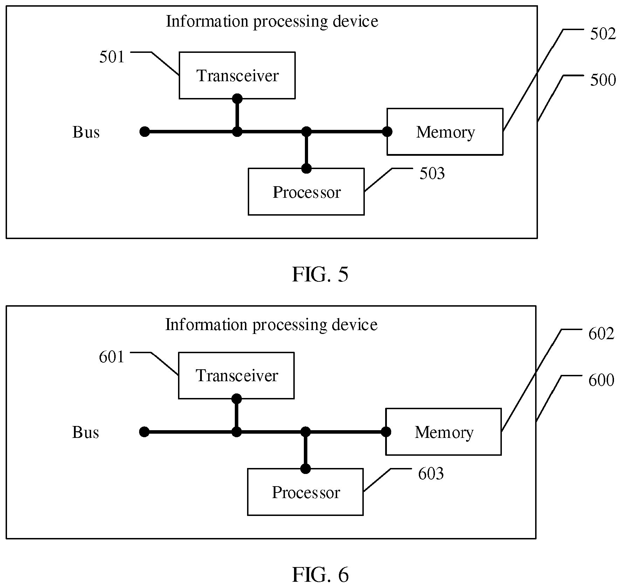

The information processing devices in the embodiments of this application are described above from a perspective of a modular functional entity, and the information processing devices in the embodiments of this application are described below from a perspective of hardware processing. Referring to FIG. 5, an embodiment of this application provides an information processing device 500, including
a transceiver 501, a memory 502, and a processor 503; where
the processor 503 is configured to generate first indication information, where the first indication information is used to indicate a first feedback mechanism of a second device for data transmission, the first feedback mechanism is at least one of a plurality of feedback mechanisms, and types of at least two of the plurality of feedback mechanisms are different;
the transceiver 501 is configured to send the first indication information to the second device, and receive first feedback information sent by the second device based on the first feedback mechanism; and
the memory 502 is configured to store a program, the first indication information, the first feedback mechanism, and the first feedback information.

The transceiver 501 is further configured to send second indication information to the second device, where the second indication information is used to indicate a resource used to send an acknowledgement message and a channel quality indication message.

Referring to FIG. 6, an embodiment of this application provides an information processing device 600, including
a transceiver 601, a memory 602, and a processor 603; where
the transceiver 601 is configured to receive first indication information sent by a first device;
the processor 603 is configured to determine a first feedback mechanism for data transmission based on the first indication information, where the first feedback mechanism is at least one of a plurality of feedback mechanisms, and types of at least two of the plurality of feedback mechanisms are different; and
the memory 602 is configured to store a program, the first indication information, the first feedback mechanism, and first feedback information.

The transceiver 601 is further configured to receive second indication information sent by the first device.

The processor 603 is further configured to determine, based on the second indication information, a resource used to send an acknowledgement message and a channel quality indication message.

All or some of the foregoing embodiments may be implemented by using software, hardware, firmware, or any combination thereof. When software is used to implement the embodiments, the embodiments may be implemented completely or partially in a form of a computer program product.

The computer program product includes one or more computer instructions. When the computer program instructions are loaded and executed on a computer, the processes or functions according to the embodiments of the present invention are completely or partially generated. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, and microwave, or the like) manner. The computer-readable storage medium may be any usable medium accessible by a computer, or a data storage device, such as a server or a data center, integrating one or more usable media. The usable medium may be a magnetic medium (for example, a floppy disk, a hard disk, or a magnetic tape), an optical medium (for example, a DVD), a semiconductor medium (for example, a solid-state drive Solid State Disk (SSD)), or the like.

It may be clearly understood by a person skilled in the art that, for the purpose of convenient and brief description, for a detailed working process of the foregoing system, apparatus, and unit, refer to a corresponding process in the foregoing method embodiments, and details are not described herein again.

In the several embodiments provided in this application, it should be understood that the disclosed system, apparatus, and method may be implemented in other manners. For example, the described apparatus embodiment is merely an example. For example, the unit division is merely logical function division and may be other division in actual implementation. For example, a plurality of units or components may be combined or integrated into another system. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of the embodiments.

In addition, functional units in the embodiments of the present invention may be integrated into one processing unit, or each of the units may exist alone physically, or two or more units may be integrated into one unit. The integrated unit may be implemented in a form of hardware, or may be implemented in a form of a software functional unit.

When the integrated unit is implemented in the form of a software functional unit and sold or used as an independent product, the integrated unit may be stored in a computer-readable storage medium. Based on such an understanding, the technical solutions of the present invention essentially, or the part contributing to the prior art, or all or some of the technical solutions may be implemented in the form of a software product. The software product is stored in a storage medium and includes several instructions for instructing a computer device (which may be a personal computer, a server, or a network device) to perform all or some of the steps of the methods described in the embodiments of the present invention. The foregoing storage medium includes: any medium that may store program code, such as a USB flash drive, a removable hard disk, a read-only memory (ROM, Read-Only Memory), a random access memory (RAM, Random Access Memory), a magnetic disk, or an optical disc.

The foregoing embodiments are merely intended for describing the technical solutions of the present invention, but not for limiting the present invention. Although the present invention is described in detail with reference to the foregoing embodiments, persons of ordinary skill in the art should understand that they may still make modifications to the technical solutions described in the foregoing embodiments without departing from the scope of the claims of the present invention.

## Claims

1. An information processing method, comprising:
Sending (201), by a first device, first indication information to a second device, wherein the first indication information is configured to indicate a first feedback mechanism of the second device for data transmission, the first feedback mechanism is at least one of a plurality of feedback mechanisms, the types of at least two of the plurality of feedback mechanisms are different, wherein the plurality of feedback mechanisms comprises at least one of the following:
feeding back the acknowledgement message and the channel quality indication message;
feeding back the acknowledgement message, and skipping feeding back the channel quality indication message;
skipping feeding back the acknowledgement message, and feeding back the channel quality indication message; and
skipping feeding back the acknowledgement message and the channel quality indication message; and
the first mechanism is feeding back an acknowledgement message and a channel quality indication message;
receiving (205), by the first device, first feedback information sent by the second device based on the first feedback mechanism;
sending (203), by the first device, second indication information to the second device, wherein the second indication information is configured to indicate the resource for sending the acknowledgement message and the channel quality indication message, and the second indication information is a slot in which control information is located, and the slot has a predetermined mapping relationship with a resource of the acknowledgement message and the channel quality indication message, wherein
the slot in which the second indication information is located is a slot n;
the resource of the channel quality indication message is located in the slot n or a slot n+1; and
the resource of the acknowledgement message is located in a slot n+k; wherein
n and k are natural numbers, and k is greater than 1.

2. The method according to claim 1, wherein a type of the first feedback information comprises an acknowledgement message and a channel quality indication message

3. The method according to claim 1 or 2, wherein the first indication information is used to indicate a first transmission mechanism for the data transmission, the first transmission mechanism is at least one of a plurality of transmission mechanisms, there is a correspondence between the plurality of transmission mechanisms and the plurality of feedback mechanisms, and the first transmission mechanism is corresponding to the first feedback mechanism.

4. An information processing method, comprising:
receiving, by a second device, first indication information sent by a first device;
determining, by the second device, a first feedback mechanism for data transmission based on the first indication information, wherein the first feedback mechanism is at least one of a plurality of feedback mechanisms, the types of at least two of the plurality of feedback mechanisms are different, wherein the plurality of feedback mechanisms comprise at least one of the following:
feeding back the acknowledgement message and the channel quality indication message;
feeding back the acknowledgement message, and skipping feeding back the channel quality indication message;
skipping feeding back the acknowledgement message, and feeding back the channel quality indication message; and
skipping feeding back the acknowledgement message and the channel quality indication message and the first feedback mechanism is feeding back an acknowledgement message and a channel quality indication message;
sending (205), by the second device, first feedback information to the first device based on the first feedback mechanism;
receiving, by the second device, second indication information sent by the first device, wherein the second indication information is configured to indicate a resource determined by the first device for sending the acknowledgement message and the channel quality indication message; and the second indication information is a slot in which control information is located, and the slot has a predetermined mapping relationship with a resource of the acknowledgement message and the channel quality indication message,
determining, by the second device, based on the second indication information, the resource for sending the acknowledgement message and the channel quality indication message, wherein the slot in which the second indication information is located is a slot n;
the resource of the channel quality indication message is located in the slot n or a slot n+1; and
the resource of the acknowledgement message is located in a slot n+k; wherein
n and k are natural numbers, and k is greater than 1.

5. The method according to claim 4, wherein a type of the first feedback information comprises an acknowledgement message and a channel quality indication message.

6. The method according to claim 4 or 5, wherein the first indication information is used to indicate a first transmission mechanism for the data transmission, the first transmission mechanism is at least one of a plurality of transmission mechanisms, there is a correspondence between the plurality of transmission mechanisms and the plurality of feedback mechanisms, and the first transmission mechanism is corresponding to the first feedback mechanism.

7. An apparatus (300, 500) being configured to perform any of the methods according to any one of claims 1 to 3.

8. An apparatus (400, 600) being configured to perform any of the methods according to any one of claims 4 to 6.

9. A computer program comprising instructions which, when the program is executed by a computer, cause the computer to perform the methods according to claims 1 to 6.

## Patentansprüche

1. Informationsverarbeitungsverfahren, das Folgendes umfasst:
Senden (201), durch ein erstes Gerät, von ersten Anzeigeinformationen zu einem zweiten Gerät,
wobei die ersten Anzeigeinformationen dazu ausgelegt sind, einen ersten Feedback-Mechanismus des zweiten Gerätes für Datenübertragung anzugeben, der erste Feedback-Mechanismus mindestens einer einer Vielzahl von Feedback-Mechanismen ist, und die Typen von mindestens zwei der Vielzahl von Feedback-Mechanismen unterschiedlich sind,
wobei die Vielzahl von Feedback-Mechanismen mindestens eines der Folgenden umfasst:
Rückmelden der Bestätigungsnachricht und der Kanalqualitäts-Anzeigenachricht;
Rückmelden der Bestätigungsnachricht, und
Überspringen des Rückmeldens der Kanalqualitäts-Anzeigenachricht;
Überspringen des Rückmeldens der Bestätigungsnachricht, und
Rückmelden der Kanalqualitäts-Anzeigenachricht; und
Überspringen des Rückmeldens der Bestätigungsnachricht und der Kanalqualitäts-Anzeigenachricht; und
der erste Mechanismus meldet eine Bestätigungsnachricht und eine Kanalqualitäts-Anzeigenachricht zurück;
Empfangen (205), durch das erste Gerät, von ersten Feedback-Informationen, gesendet von dem zweiten Gerät auf der Basis des ersten Feedback-Mechanismus;
Senden (203), durch das erste Gerät, von zweiten Anzeigeinformationen zu dem zweiten Gerät,
wobei die zweiten Anzeigeinformationen dazu ausgelegt sind, die Ressource zum Senden der Bestätigungsnachricht und der Kanalqualitäts-Anzeigenachricht anzugeben, und die zweiten Anzeigeinformationen ein Schlitz sind, in dem sich Steuerinformationen befinden, und der Schlitz eine vorbestimmte Zuordnungsbeziehung mit einer Ressource der Bestätigungsnachricht und der Kanalqualitäts-Anzeigenachricht hat,
wobei der Schlitz, in dem sich die zweiten Anzeigeinformationen befinden, ein Schlitz n ist;
die Ressource der Kanalqualitäts-Anzeigenachricht sich in dem Schlitz n oder einem Schlitz n+1 befindet; und
die Ressource der Bestätigungsnachricht sich in einem Schlitz n+k befindet;
wobei n und k natürliche Zahlen sind und k größer als 1 ist.

2. Verfahren gemäß Anspruch 1,
wobei ein Typ der ersten Feedback-Informationen eine Bestätigungsnachricht und eine Kanalqualitäts-Anzeigenachricht umfasst.

3. Verfahren gemäß Anspruch 1 oder 2,
wobei die ersten Anzeigeinformationen verwendet werden, um einen ersten Übertragungsmechanismus für die Datenübertragung anzugeben, der erste Übertragungsmechanismus mindestens einer einer Vielzahl von Übertragungsmechanismen ist, eine Korrespondenz zwischen der Vielzahl von Übertragungsmechanismen und der Vielzahl von Feedback-Mechanismen besteht, und der erste Übertragungsmechanismus dem ersten Feedback-Mechanismus entspricht.

4. Informationsverarbeitungsverfahren, das Folgendes umfasst:
Empfangen, durch ein zweites Gerät, von ersten Anzeigeinformationen, gesendet von einem ersten Gerät;
Bestimmen, durch das zweite Gerät, eines ersten Feedback-Mechanismus für Datenübertragung auf der Basis der ersten Anzeigeinformationen,
wobei der erste Feedback-Mechanismus mindestens einer einer Vielzahl von Feedback-Mechanismen ist und die Typen von mindestens zwei der Vielzahl von Feedback-Mechanismen unterschiedlich sind,
wobei die Vielzahl von Feedback-Mechanismen mindestens eines der Folgenden umfasst:
Rückmelden der Bestätigungsnachricht und der Kanalqualitäts-Anzeigenachricht;
Rückmelden der Bestätigungsnachricht, und
Überspringen des Rückmeldens der Kanalqualitäts-Anzeigenachricht;
Überspringen des Rückmeldens der Bestätigungsnachricht, und
Rückmelden der Kanalqualitäts-Anzeigenachricht; und
Überspringen des Rückmeldens der Bestätigungsnachricht und der Kanalqualitäts-Anzeigenachricht, und der erste Feedback-Mechanismus meldet eine Bestätigungsnachricht und eine Kanalqualitäts-Anzeigenachricht zurück,
Senden (205), durch das zweite Gerät, von ersten Feedback-Informationen zu dem ersten Gerät auf der Basis des ersten Feedback-Mechanismus;
Empfangen, durch das zweite Gerät, von zweiten Anzeigeinformationen, gesendet von dem ersten Gerät;
wobei die zweiten Anzeigeinformationen dazu ausgelegt sind, eine durch das erste Gerät bestimmte Ressource zum Senden der Bestätigungsnachricht und der Kanalqualitäts-Anzeigenachricht anzugeben;
und die zweiten Anzeigeinformationen ein Schlitz sind, in dem sich Steuerinformationen befinden, und der Schlitz eine vorbestimmte Zuordnungsbeziehung mit einer Ressource der Bestätigungsnachricht und der Kanalqualitäts-Anzeigenachricht hat,
Bestimmen, durch das zweite Gerät, auf der Basis der zweiten Anzeigeinformationen, der Ressource zum Senden der Bestätigungsnachricht und der Kanalqualitäts-Anzeigenachricht,
wobei der Schlitz, in dem sich die zweiten Anzeigeinformationen befinden, ein Schlitz n ist;
die Ressource der Kanalqualitäts-Anzeigenachricht sich in dem Schlitz n oder einem Schlitz n+1 befindet; und
die Ressource der Bestätigungsnachricht sich in einem Schlitz n+k befindet;
wobei n und k natürliche Zahlen sind und k größer als 1 ist.

5. Verfahren gemäß Anspruch 4,
wobei ein Typ der ersten Feedback-Informationen eine Bestätigungsnachricht und eine Kanalqualitäts-Anzeigenachricht umfasst.

6. Verfahren gemäß Anspruch 4 oder 5,
wobei die ersten Anzeigeinformationen verwendet werden, um einen ersten Übertragungsmechanismus für die Datenübertragung anzugeben, der erste Übertragungsmechanismus mindestens einer einer Vielzahl von Übertragungsmechanismen ist, eine Korrespondenz zwischen der Vielzahl von Übertragungsmechanismen und der Vielzahl von Feedback-Mechanismen besteht, und der erste Übertragungsmechanismus dem ersten Feedback-Mechanismus entspricht.

7. Vorrichtung (300, 500), die dazu ausgelegt ist, eines der Verfahren gemäß einem der Ansprüche 1 bis 3 durchzuführen.

8. Vorrichtung (400, 600), die dazu ausgelegt ist, eines der Verfahren gemäß einem der Ansprüche 4 bis 6 durchzuführen.

9. Computerprogramm, das Anweisungen enthält, die, wenn das Programm durch einen Computer ausgeführt wird, den Computer veranlassen, die Verfahren gemäß den Ansprüchen 1 bis 6 auszuführen.

## Revendications

1. Procédé de traitement d'informations, comprenant :
envoyer (201), par un premier dispositif, des premières informations d'indication à un second dispositif, dans lequel les premières informations d'indication sont configurées pour indiquer un premier mécanisme de rétroaction du second dispositif pour la transmission de données, le premier mécanisme de rétroaction est au moins l'un d'une pluralité de mécanismes de rétroaction, les types d'au moins deux de la pluralité de mécanismes de rétroaction sont différents, dans lequel la pluralité de mécanismes de rétroaction comprend au moins l'une des actions suivantes :
renvoyer le message d'accusé de réception et le message d'indication de qualité de canal ;
renvoyer le message d'accusé de réception, et sauter le renvoi du message d'indication de qualité de canal ;
sauter le renvoi du message d'accusé de réception, et renvoyer le message d'indication de qualité de canal ; et
sauter le renvoi du message d'accusé de réception et du message d'indication de qualité de canal ; et
le premier mécanisme renvoie un message d'accusé de réception et un message d'indication de qualité de canal ;
recevoir (205), par le premier dispositif, des premières informations de rétroaction envoyées par le second dispositif sur la base du premier mécanisme de rétroaction ;
envoyer (203), par le premier dispositif, des secondes informations d'indication au second dispositif, dans lequel les secondes informations d'indication sont configurées pour indiquer la ressource pour envoyer le message d'accusé de réception et le message d'indication de qualité de canal, et les secondes informations d'indication sont un intervalle dans lequel sont situées des informations de commande, et l'intervalle a une relation de mappage prédéterminée avec une ressource du message d'accusé de réception et du message d'indication de qualité de canal, dans lequel l'intervalle dans lequel sont situées les secondes informations d'indication est un intervalle n ;
la ressource du message d'indication de qualité de canal est située dans l'intervalle n ou un intervalle n + 1 ; et
la ressource du message d'accusé de réception est située dans un intervalle n + k, où n et k sont des nombres naturels et k est supérieur à 1.

2. Procédé selon la revendication 1, dans lequel un type des premières informations de rétroaction comprend un message d'accusé de réception et un message d'indication de qualité de canal.

3. Procédé selon la revendication 1 ou 2, dans lequel les premières informations d'indication sont utilisées pour indiquer un premier mécanisme de transmission pour la transmission de données, le premier mécanisme de transmission est au moins l'un d'une pluralité de mécanismes de transmission, il existe une correspondance entre la pluralité de mécanismes de transmission et la pluralité de mécanismes de rétroaction, et le premier mécanisme de transmission correspond au premier mécanisme de rétroaction.

4. Procédé de traitement d'informations, comprenant :
recevoir, par un second dispositif, des premières informations d'indication envoyées par un premier dispositif;
déterminer, par le second dispositif, un premier mécanisme de rétroaction pour la transmission de données sur la base des premières informations d'indication, dans lequel le premier mécanisme de rétroaction est au moins l'un d'une pluralité de mécanismes de rétroaction, les types d'au moins deux de la pluralité de mécanismes de rétroaction sont différents, dans lequel la pluralité de mécanismes de rétroaction comprend au moins l'une des actions suivantes :
renvoyer le message d'accusé de réception et le message d'indication de qualité de canal ;
renvoyer le message d'accusé de réception, et sauter le renvoi du message d'indication de qualité de canal ;
sauter le renvoi du message d'accusé de réception, et renvoyer le message d'indication de qualité de canal ; et
sauter le renvoi du message d'accusé de réception et du message d'indication de qualité de canal, et le premier mécanisme de rétroaction renvoie un message d'accusé de réception et un message d'indication de qualité de canal ;
envoyer (205), par le second dispositif, des premières informations de rétroaction au premier dispositif sur la base du premier mécanisme de rétroaction ;
recevoir, par le second dispositif, des secondes informations d'indication envoyées par le premier dispositif, dans lequel les secondes informations d'indication sont configurées pour indiquer une ressource déterminée par le premier dispositif pour envoyer le message d'accusé de réception et le message d'indication de qualité de canal, et les secondes informations d'indication sont un intervalle dans lequel sont situées des informations de commande, et l'intervalle a une relation de mappage prédéterminée avec une ressource du message d'accusé de réception et du message d'indication de qualité de canal,
déterminer, par le second dispositif, sur la base des secondes informations d'indication, la ressource pour envoyer le message d'accusé de réception et le message d'indication de qualité de canal, dans lequel l'intervalle dans lequel sont situées les secondes informations d'indication est un intervalle n ;
la ressource du message d'indication de qualité de canal est située dans l'intervalle n ou un intervalle n + 1 ; et
la ressource du message d'accusé de réception est située dans un intervalle n + k, où n et k sont des nombres naturels et k est supérieur à 1.

5. Procédé selon la revendication 4, dans lequel un type des premières informations de rétroaction comprend un message d'accusé de réception et un message d'indication de qualité de canal.

6. Procédé selon la revendication 4 ou 5, dans lequel les premières informations d'indication sont utilisées pour indiquer un premier mécanisme de transmission pour la transmission de données, le premier mécanisme de transmission est au moins l'un d'une pluralité de mécanismes de transmission, il existe une correspondance entre la pluralité de mécanismes de transmission et la pluralité de mécanismes de rétroaction, et le premier mécanisme de transmission correspond au premier mécanisme de rétroaction.

7. Appareil (300, 500) configuré pour exécuter l'un quelconque des procédés selon l'une quelconque des revendications 1 à 3.

8. Appareil (400, 600) configuré pour exécuter l'un quelconque des procédés selon l'une quelconque des revendications 4 à 6.

9. Programme informatique comprenant des instructions qui, lorsque le programme est exécuté par un ordinateur, amènent l'ordinateur à exécuter les procédés selon les revendications 1 à 6.
